Europäisches Patentamt

European Patent Office

Office européen des brevets

(11) Publication number: **0 037 720**
**A2**

# EUROPEAN PATENT APPLICATION

(21) Application number: **81301455.2**

(22) Date of filing: **03.04.81**

(51) Int. Cl.³: **G 05 B 19/42**

(30) Priority: **04.04.80 JP 43445/80**

(43) Date of publication of application:
**14.10.81 Bulletin 81/41**

(84) Designated Contracting States:
**DE FR GB**

(71) Applicant: **FUJITSU FANUC LIMITED**
**5-1, Asahigaoka, 3-chome**
**Hino-shi, Tokyo 191(JP)**

(72) Inventor: **Nozawa, Ryoichiro**
**12-1-2105, Sarugaku-cho Shibuya-ku**
**Tokyo(JP)**

(72) Inventor: **Matsui, Mitsuo**
**1-12-17, Higashi-Nakano Nakano-ku**
**Tokyo(JP)**

(74) Representative: **George, Sidney Arthur et al,**
**Gill Jennings & Every 53-64 Chancery Lane**
**London WC2A 1HN(GB)**

(54) A method of machining using numerical data.

(57) In a method of carrying out a cutting operation using numerical data obtained by tracing a model, a first stylus (S1) and a second stylus (S2) having, respectively, a smaller radius ($r_1$) and a larger radius ($r_2$) than the cutting tool are used to trace the model (M), thereby producing first and second numerical data ($P_1$, $P_2$). The required numerical data for controlling the cutting tool are obtained by applying a proportional allotment procedure to the first and second numerical data in accordance with the value of the actual radius ($r_c$) of the cross-section of the cutting tool.

*Fig. I*

EP 0 037 720 A2

## A METHOD OF MACHINING USING NUMERICAL DATA

This invention relates to a method of carrying out a cutting operation using numerical data obtained by tracing a model using a stylus.

In general, in the process of producing numerical data which are obtained by tracing a model using a stylus, and which are used in the subsequent cutting operation, the profile of the model is continuously traced and the produced trace data are processed by means of calculation so that numerical data for the subsequent cutting work are obtained. In view of the fact that the precision of the cutting work is deteriorated when the cutting operation is carried out using erroneous numerical data obtained from tracing of the model with a tracing error, a prior art method of numerically-controlled cutting has been proposed in which the numerical data are corrected by data corresponding to the error. This prior art method is described, for example, in published Japanese Patent Specification No.51-46311.

There is another problem resulting from the need to correct the radius of the cross-section of a cutting tool. That is, when the radius of the cross-section of a cutting tool is different from that of the stylus, it is necessary to correct the value of the radius of the cutting tool and to carry out the cutting work using the corrected value of the radius of the cutting tool.

To solve this problem, a prior art method of correction of the radius of the cutting tool has been proposed in which the calculation of the value is conducted in the direction of the vector of the trace deflection, and the correction of the radius of the cutting tool is carried out using the result of the calculation. However, it sometimes happens that an incorrect value of the trace deflection is obtained, and only a unidimensional trace deflection is obtained by using a unidimensional tracer, and hence no instruction is obtained for carrying out three-dimensional correction. Under these circumstances, correct calculation of the data cannot be carried out. Therefore, such prior art method does not provide a satisfactory solution of the problem.

It is an object of the present invention to provide a substantially exact calculation of the correction for the radius of the cutting tool, so that suitable numerical data for the cutting work are obtained.

In accordance with the present invention there is provided a method of machining using numerical data obtained by tracing a model using a stylus, characterised by the steps of applying a first stylus and a second stylus to a model; producing first and second numerical data by causing the first and second styli to trace the model; obtaining desired numerical data by applying a proportional allotment procedure to the first and second numerical data in accordance with the value of the radius of the cross-section of a cutting tool; and executing a cutting operation of the cutting tool using the obtained numerical data.

An embodiment of the invention will now be described, by way of example, with reference to the accompanying drawings, in which:

Fig.1 illustrates the tracing paths of the styli,

Fig.2 is a block schematic diagram of a circuit used for obtaining numerical data in accordance with the present invention, and

Fig.3 is a block schematic diagram of a circuit used for controlling a cutting operation using the obtained numerical data.

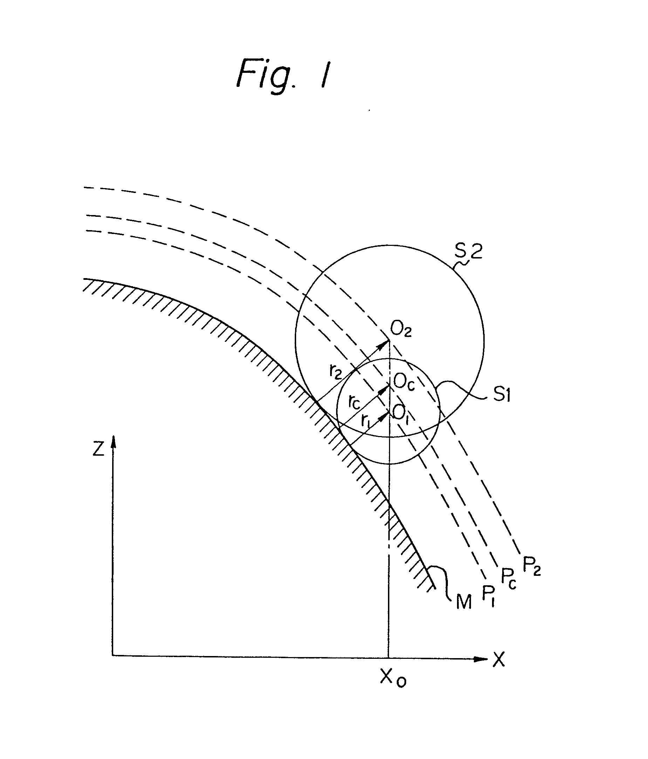

The tracing paths of styli S1 and S2 used for obtaining numerical data in accordance with an embodiment of the present invention are illustrated in Fig.1. Numerical data $P_1$ representing the path of the centre of the stylus S1 which has a cross-section of a small radius $r_1$ is produced as the stylus S1 traces the contour of a model M. Thereafter, numerical data $P_2$ representing the path of the centre of the stylus S2 having a cross-section of a larger radius $r_2$ is produced as the stylus S2 traces the contour of the model M. The radius $r_1$ corresponds to the minimum possible radius of the cross-section of the cutting tool, whilst the radius $r_2$ corresponds to the maximum possible radius of the cross-section of the cutting tool.

It is assumed that the tracing operations of the styli S1 and S2 are carried out in the direction of an X axis of an $(X, Z)$ coordinate system. Data $(X_0, Z_1)$ representing the numerical data of the centre $O_1$ of the stylus S1 corresponds to data $(X_0, Z_2)$ representing the numerical data of the centre $O_2$ of the stylus S2, with respect to the reference point $X_0$ on the X axis.

Using the point $X_0$ as the reference point, a proportional allotment of the distance $\overline{O_1 O_2}$ is carried out with regard to a value $r_c$, which is the radius of the cross-section of the actual cutting tool. As the X, Z coordinates of the centres of the small and large radius styli S1 and S2 are $(X_0, Z_1)$ and $(X_0, Z_2)$, respectively, and the X, Z coordinates to be obtained for the position $O_c$ representing the centre of the cutting tool are $(X_0, Z_c)$, the value $Z_c$ is calculated by the proportional allotment expressed in the following equation.

$$Z_c = \frac{Z_1 - Z_2}{r_1 - r_2}(r_c - r_1) + Z_1$$

Thus, numerical data $P_c$ representing the desired corrected path for the centre of the cutting tool is obtained by using the above-obtained value $Z_c$.

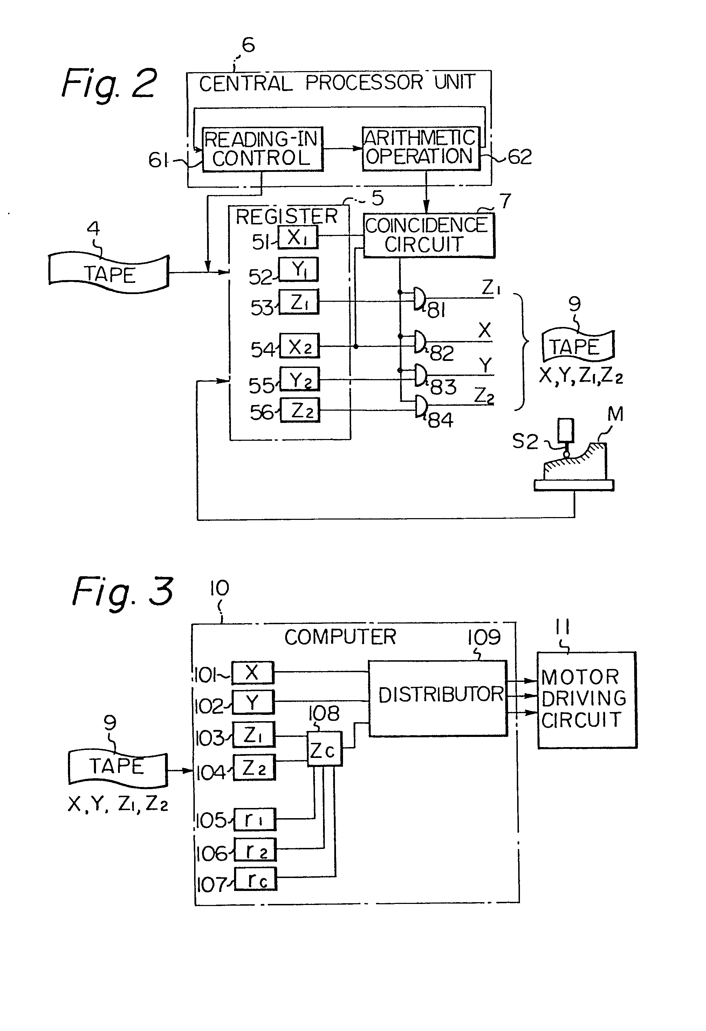

A circuit for obtaining the numerical data in accordance with the above-indicated equation and for carrying out a cutting operation using the obtained numerical data is illustrated in Figs. 2 and 3. The circuit of Fig.2 is used for obtaining numerical data to be stored in a tape 9, whilst the circuit of Fig.3 is used for controlling a cutting operation using the resulting tape 9.

The numerical data relating to the tracing path of the small radius stylus $S1$ are stored in a tape 4 and are supplied from the tape 4 to register elements 51, 52 and 53 of a register 5 for storing $X_1$, $Y_1$ and $Z_1$ values under the control of the output of a reading-in control circuit 61 of a central processor unit 6. Also, numerical data relating to the tracing path of the large radius stylus $S2$ are fed to register elements 54, 55 and 56 of the register 5, for storing $X_2$, $Y_2$ and $Z_2$ values.

A coincidence circuit 7 receives the data $X_1$ and $X_2$ from the register elements 51 and 54, respectively, and under the control of the output of an arithmetic operation circuit 62 produces a signal representing the detection of coincidence of the X axis coordinates. This signal is supplied to one input of each of four AND gates 81, 82, 83 and 84. The data $Z_1$, $X_2$, $Y_2$ and $Z_2$ are supplied to the other input of the AND gates 81 to 84. Then, the numerical data $X$, $Y$, $Z_1$, $Z_2$ of the small and large radius styli $S1$ and $S2$ are produced from the AND gates 81 to 84 and are stored on the tape 9.

In the execution of a cutting operation, the data $(X, Y, Z_1, Z_2)$ read-out from the tape 9 are supplied to a computer 10, as illustrated in Fig.3. The computer 10 carries out the calculation in accordance with the above-indicated equation, using the values $Z_1$, $Z_2$, $r_1$, $r_2$ and $r_c$ stored in register elements 101 to 107, so that the value $Z_c$ is obtained and stored in a register element 108. The thus-obtained numerical data X, Y, $Z_c$ are fed to a distributor circuit 109 which produces a signal for controlling the operation of the cutting tool. The control signal is fed to a motor driving circuit 11 for controlling the cutter position, so that the desired cutting operation is carried out.

## CLAIMS

1. A method of carrying out a cutting operation using numerical data obtained by tracing a model using stylus means, characterised by the steps of applying a first stylus (S1) and a second stylus (S2) to the model (M); producing first and second numerical data ($P_1$, $P_2$) by causing the first and second styli to trace the model; obtaining desired numerical data by applying a proportional allotment procedure to the first and second numerical data in accordance with the value of the radius ($r_c$) of the cross-section of a cutting tool, and executing a cutting operation of the cutting tool using the obtained numerical data.

2. A method as claimed in Claim 1, characterised in that the required position ($Z_c$) of the centre of radius of the cutting tool is calculated from

$$Z_c = \frac{Z_1 - Z_2}{r_1 - r_2} (r_c - r_1) + Z_1$$

wherein $Z_1$ and $Z_2$ are corresponding positions of the centres of radius of the first and second styli ($S_1, S_2$), respectively; and $r_1$ and $r_2$ are the radii of the first and second styli ($S_1, S_2$), respectively.

3. Apparatus for carrying out the calculation of Claim 1 or Claim 2, characterised by storage means (4) for storing data ($X_1$, $Y_1$, $Z_1$) relating to tracing by the first stylus ($S_1$); register elements (51-53) into which the data from the storage means (4) are read; register elements (54 to 56) into which data ($X_2, Y_2, Z_2$) relating to tracing by the second stylus ($S_2$) are fed; a coincidence circuit (7) for detecting coincidence between the data items $X_1$ and $X_2$; a gating circuit for passing the data items $X$, $Y$, $Z_1$ and $Z_2$ when said coincidence occurs; second storage means (9) for storing the data $X, Y, Z_1, Z_2$;

register elements (101 to 104) to register the data read out from the second storage means (9); register elements (105 to 107) for storing the values $r_1$, $r_2$ and $r_c$, respectively; and computing means for computing the value of $Z_c$ from the data items contained in the register elements (101 to 107).

Fig. 1

0037720

2/2

*Fig. 2*

6

CENTRAL PROCESSOR UNIT

61 — READING-IN CONTROL → ARITHMETIC OPERATION — 62

4

TAPE

5

REGISTER

51 — $X_1$
52 — $Y_1$
53 — $Z_1$
54 — $X_2$
55 — $Y_2$
56 — $Z_2$

7

COINCIDENCE CIRCUIT

81 $Z_1$
82 X
83 Y
84 $Z_2$

9

TAPE
$X, Y, Z_1, Z_2$

S2   M

*Fig. 3*

10

COMPUTER   109

101 — X
102 — Y
103 — $Z_1$
104 — $Z_2$
105 — $r_1$
106 — $r_2$
107 — $r_c$

108 — $Z_c$

DISTRIBUTOR

11

MOTOR DRIVING CIRCUIT

9

TAPE
$X, Y, Z_1, Z_2$